# EUROPEAN PATENT SPECIFICATION

(11) **EP 4 109 196 B1**
(45) Date of publication and mention of the grant of the patent: **31.01.2024**
(21) Application number: 22178829.2
(22) Date of filing: 14.06.2022
(51) Int. Cl.: G05D 1/02

(54) **A METHOD FOR OPERATING AN AUTOMATED GUIDED VEHICLE AND AN AUTOMATED GUIDED VEHICLE**
VERFAHREN ZUM BETRIEB EINES AUTOMATISCH GEFÜHRTEN FAHRZEUGS UND AUTOMATISCH GEFÜHRTES FAHRZEUG
PROCÉDÉ DE FONCTIONNEMENT DE VÉHICULE À GUIDAGE AUTOMATIQUE ET VÉHICULE À GUIDAGE AUTOMATIQUE

(30) Priority: 21.06.2021 NL 2028498
(43) Date of publication of application: 28.12.2022
(73) Proprietor: VDL Steelweld B.V., 4825 BJ Breda (NL)
(72) Inventor: VAN ETTEN, Jeffrey Johannes Antonius Maria, 4825 BJ Breda (NL); THELEN, John Alexander Johanna, 4825 BJ Breda (NL)
(74) Representative: Algemeen Octrooi- en Merkenbureau B.V.

(56) References cited:
- EP-A1- 3 223 098
- EP-A1- 3 805 891
- US-A1- 2019 160 675

## Description

According to a first aspect the present disclosure relates to a method for operating an automated guided vehicle.

According to a second aspect the present disclosure relates to an automated guided vehicle.

The use of automated guided vehicles is widely spread across many different applications such as at large industrial sites and warehouses. A well-known example is ECT's Delta/Sealand Terminal in Rotterdam which is considered 'industries first' completely automated container terminal in the world. Automated guided vehicles successfully transport containers between ships and stack since 1993. Since then, many container terminals followed the example and different automated guided vehicles solutions where introduced by various competitors. The common safety case for this type of automated guided vehicles relies heavily on the fact that those operating zones are unmanned. As a result, the likeliness that the automated guided vehicles will cause a hazardous situation, meaning injury or death to a person, is practically zero. Despite this being a valid business case in some applications, the scalability of this type of automated guided vehicles towards other applications remains very limited due to the strict requirement of unmanned zones only.

Many indoor automated guided vehicle applications currently exist in both unmanned and mixed traffic operating zones. These indoor applications generally lack the capability to handle additional challenges known for an outdoor environment that may include 24/7 availability even in adverse weather conditions (e.g. rain, snow, fog), handling of complex road networks (e.g. crossings, two-way traffic, priority rules and rail crossings), robustness against various road surfaces (including disturbances from e.g. slopes, potholes and rail crossings) and safe operation in mixed traffic scenario's in collaboration with other outdoor road users (e.g. cars, vans, trucks, pedestrians and cyclists).

For example, US 2019/0160675 A1 discloses autonomous mobile robot systems which can be used to safely and efficiently navigate through a facility while avoiding objects in the path of the autonomous mobile robot during completion of a task. Specifically, a first bounded area based on first sensor data may be generated around an autonomous mobile robot where the first sensor data is used to identify objects in a travel path for the autonomous mobile robot and determine a speed for navigating the facility. A second bounded area of a size less than the first bounded area may be generated around the autonomous mobile robot based on speed information form propulsion components of the autonomous mobile robot. A new travel path and new speed information may be generated based on identifying an object in the travel path, dimensional measurements of a space around the object, and a current size of the second bounded area.

As a further example, EP 3 805 891 A1 discloses a driverless, i.e. an autonomous driving transport vehicle for the transport of transportation goods over a road. The vehicle comprises a loading zone for receiving the transportation goods, a sensor device for determining a position and distance measurement to objects in the surroundings of the transportation vehicle, and a control device, by means of which the transportation vehicle may be guided past the objects based on the sensor data which is provided by the sensor device. The safety distance is defined between the objects and the path of the vehicle. The safety distance depends on how much the transportation goods extend from the transportation vehicle. The loading zone is equipped with a scale for determining a mass of the transportation goods which are arranged in the loading zone and the control device is configured, to adapt the safety distance and/or a maximum driving speed of the transport vehicle depending of the mass of the respective transportation goods to be transported.

As a yet further example, EP 3 223 098 A1 discloses a controller that controls driving of an autonomously moving vehicle which includes a first sensos that detects an obstacle and a direction of travel of the vehicle, and a processor that sets a virtual region surrounding the vehicle. The processor stops the vehicle when the obstacle when the obstacle is detected therein, determines whether the obstacle is present in the direction of travel, determines whether the vehicle has been stopped for a predetermined amount of time when the obstacle is present, reduces a length of the virtual region in the direction of travel to provide an adjusted virtual region when the vehicle is determined to have been stopped for the predetermined amount of time, causes the vehicle to drive when the obstacle is not detected within the adjusted virtual region and stops the vehicle when the obstacle is detected within the adjusted virtual region.

An objective of the present disclosure is to provide a method and an automated guided vehicle overcoming at least partly a drawback of the known automated guided vehicles.

The objective is achieved by the method as defined in claim 1

By performing the steps of determining and setting, the automated guided vehicle is operated in a manner that avoids, or at least significantly reduces the risk of a collision between the automated guided vehicle and a moving object such as a person.

Preferably, the perimeter surrounding said automated guided vehicle covers all potential swept paths of said automated guided vehicle. This is beneficial for avoiding, or at least significantly reducing the risk of a collision between the automated guided vehicle and a moving object such as a person.

In this regard, it is beneficial if said method further comprises the steps of:
- detecting, by a detection system, during movement of said automated guided vehicle, an object outside said automated guided vehicle;
- determining, by a determining unit, that said object is within a predetermined distance from said safety zone;
- controlling, by a control unit, a braking system of said automated guided vehicle for performing said safety stop triggered by said determining that said detected object is within said predetermined distance.

In this regard, it is beneficial if said predetermined distance is equal to zero. A predetermined distance of zero is beneficial for allowing the automated guided vehicle to move relative close to objects, in particular stationary objects such as walls and containers.

Preferably, said determining unit is arranged for determining that said object is within said predetermined distance from said safety zone, by determining an angle and a distance of said object to said automated guided vehicle and comparing said angle and said distance to said safety zone, wherein during said step of determining, said angle and said distance of said object to said automated guided vehicle are determined. This is beneficial for determining a position of the object relative to the automated guided vehicle, preferably relative to a position of the object relative to the automated guided vehicle and a movement direction of the automated guided vehicle.

In an embodiment of the method according to the present disclosure, a distance of said perimeter to said automated guided vehicle varies along said perimeter. This is beneficial for allowing the automated guided vehicle to move relative close to objects.

Preferably, during said step of determining said vehicle movement parameter of said automated guided vehicle, said vehicle movement parameter additionally comprises at least one of:
- a predetermined speed of said automated guided vehicle;
- a predetermined steering speed of said automated guided vehicle;
- a predetermined braking distance of said automated guided vehicle when moving at said predetermined speed.

Preferably, during said step of setting, said vehicle movement parameter of said automated guided vehicle comprises at least one of:
- a set maximum speed of said automated guided vehicle;
- a set maximum steering angle of said automated guided vehicle;
- a set maximum steering speed of said automated guided vehicle.

In an embodiment of the method, the method further comprises the step of:
- determining, by a processing unit of the automated guided vehicle, a planning zone for movement of said automated guided vehicle, wherein said planning zone comprises a further perimeter that covers a planned swept path of said automated guided vehicle.

In this regard, it is beneficial if a distance between said automated guided vehicle and said further perimeter is smaller than a distance between said automated guided vehicle and said perimeter. This is beneficial for avoiding, or at least significantly reducing the risk of a collision between the automated guided vehicle and a moving object such as a person.

According to the second aspect, the present disclosure relates to an automated guided vehicle as defined in claim 8.

Embodiments of the automated guided vehicle according to the second aspect correspond to embodiments of the method according to the first aspect of the present disclosure. The advantages of the automated guided vehicle according to the second aspect correspond to advantages of the method according to first aspect of the present disclosure presented previously.

In this regard, it is beneficial if said predetermined distance is equal to zero. A predetermined distance of zero is beneficial for allowing the automated guided vehicle to move relative close to objects, in particular stationary objects such as walls and containers.

Preferably, said determining unit is further arranged for determining that said object is within said predetermined distance from said safety zone, by determining an angle and a distance of said object to said vehicle and comparing said angle and distance to said safety zone.

It is advantageous if, said automated guided vehicle comprises an electromotor for moving said automated guided vehicle and wherein said braking system is arranged for stopping said automated guided vehicle, during a safety stop, by controlling said electromotor.

In this regard, it is beneficial if said braking system is arranged for stopping said automated guided vehicle, during said safety stop, solely by controlling said electromotor.

Preferably, said braking system is according to NEN-EN-IEC 61800-5-2:2017. This is beneficial for avoiding, or at least significantly reducing the risk of a collision between the automated guided vehicle and a moving object such as a person.

In this regard, it is beneficial if safety functions corresponding to braking and speed control are according to the typical drive-base safety functions according NEN-EN-IEC 61800-5-2:2017.

Preferably, said detection system comprises a plurality of LiDAR scanners, preferably a plurality of 2D LiDAR scanners, that are arranged such that said detection system is arranged for detecting, during movement of said automated guided vehicle, 360 degrees around said automated guided vehicle.

Preferably, a steering system of said automated guided vehicle of steering said automated guided vehicle is according to NEN-EN-IEC 61800-5-2:2017. This is beneficial for avoiding, or at least significantly reducing the risk of a collision between the automated guided vehicle and a moving object such as a person.

In an embodiment of the automated guided vehicle according to the present disclosure a steering system of said automated guided vehicle comprises a linear actuator for steering said automated guided vehicle and a servomotor provided with an integrated encoder for powering said linear actuator for steering said automated guided vehicle.

In this regard, it is beneficial if safety functions corresponding to a steering angle and a steering speed of said automated guided vehicle, preferably a maximum steering angle and a maximum steering speed are according to the typical drive-base safety functions according NEN-EN-IEC 61800-5-2:2017.

It is advantageous if said automated guided vehicle comprises a servomotor for moving said automated guided vehicle.

Preferably, said automated guided vehicle is according to ISO 3691-4:2020.

Preferably, said automated guided vehicle is according directive 2006/42/EC of the European Parliament and of the Council.

Preferably, said automated guided vehicle further comprises a processing unit arranged for determining a planning zone for movement of said automated guided vehicle, wherein said planning zone comprises a further perimeter that covers a planned swept path of said automated guided vehicle.

In this regard, it is beneficial if a distance between said automated guided vehicle and said further perimeter is smaller than a distance between said automated guided vehicle and said perimeter. This is beneficial for avoiding, or at least significantly reducing the risk of a collision between the automated guided vehicle and a moving object such as a person.

Preferably, said automated guided vehicle is free from a connection to a GPS system.

Embodiments of the method and apparatus according to the present disclosure will next be explained by means of the accompanying schematic figures, wherein:
Fig. 1 - shows a schematic overview of a method for operating an automated guided vehicle according to the first aspect the present disclosure;
Fig. 2 - shows a schematic overview of an automated guided vehicle according to the second aspect the present disclosure.

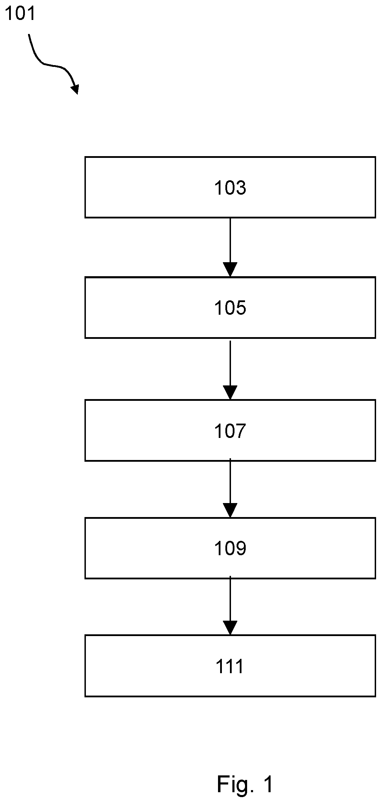

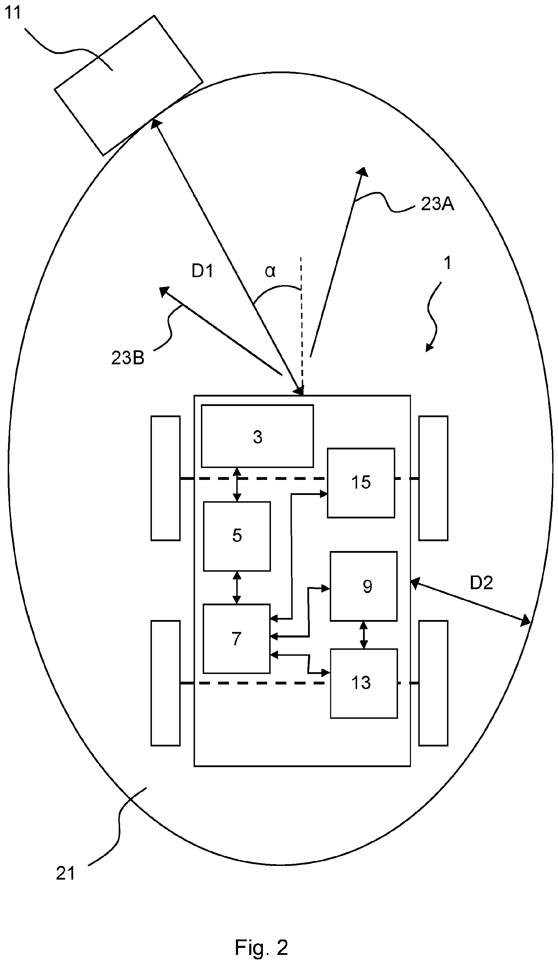

Figure 1 shows an schematic overview of the steps of a method 101 for operating an automated guided vehicle 1. The automated guided vehicle 1 is schematically illustrated in figure 2.

The automated guided vehicle 1 is controlled by a control unit 7. The control unit 7 is communicatively coupled to a determining unit 5, a steering system 15, a braking system 9, and an electromotor 13.

The determining unit 5 is communicatively coupled to a detection system 3, that is arranged for detecting an object 11 during movement of the automated guided vehicle 1. The detection system 3 comprises a number of 2D LiDAR scanners which allows the detection system 3 to detect the object 11 360 degrees around the automated guided vehicle 1. When the object 11 is detected by the detection system 3, the determining unit 5 determines whether or not the detected object 11 is within a safety zone 21. The safety zone 21 is defined by a perimeter surrounding the automated guided vehicle 1. For determining that the detected object 11 is within safety zone 21, an angle α and a distance D1 of the object 11 to the automated guided vehicle 1 may be determined. The angle α and the distance D1 are compared to the safety zone 21 by the determining unit 5, in order to determine a possible collision.

The safety zone 21 covers potential swept paths to which the control unit 7 may control the automated guided vehicle 1 during a safety stop of the automated guided vehicle 1. The automated guided vehicle 1 may be controlled towards a swept path in order to overcome a collision with the detected object 11, when the detected object is within the range of the safety zone 21. In figure 2, two potential swept paths 23A, 23B are shown. The shape and size of the safety zone 21 is related to the vehicle movement parameters, like the speed, the steering angle, the steering speed, and the braking distance of the automated guided vehicle 1, wherein a distance D2 of the perimeter of the safety zone 21 to the automated guided vehicle 1 varies along the perimeter.

The control unit 7 controls the steering system 15 for steering the automated guided vehicle 1 to the appropriate direction. The appropriate direction may be a predetermined direction. The steering system 15 comprises a linear actuator for steering the automated guided vehicle 1 and a servomotor provided with an integrated encoder for powering the linear actuator.

The control unit 7 controls the electromotor 13 for moving the automated guided vehicle 1, and controls the braking system 9 for stopping the automated guided vehicle 1. In case the determining unit 5 determines that the detected object 11 is at the perimeter of the safety zone 21, the control unit 7 controls the braking system 9 for performing a safety stop. The braking system 9 is communicatively coupled to the electromotor 13, such that the automated guided vehicle 1 is stopped solely by controlling the electromotor 13, during the safety stop.

The control unit 7 comprises a processor and an internal memory, on which instructions are stored that allow the processor to execute the steps of the method 101 for operating an automated guided vehicle 1.

During the step of determining 103 one of the vehicle movement parameters of the automated guided vehicle 1 is determined by the control unit 7. Based on the determined vehicle movement parameter, the control unit 7 sets and/or adapts the safety zone 21 in the subsequent step of setting 105. The control unit 7 furthermore sets a maximum speed, and a maximum steering speed of the automated guided vehicle 1, based on the set or adapted safety zone 21.

During movement of the automated guided vehicle 1, during the step of detecting 107, the angle α and the distance D1 of the object 11 to the automated guided vehicle 1 may be detected by the detection system 3 and compared to the safety zone 21. During the step of determining 109, the angle α and the distance D1 of the detected object 11 to the automated guided vehicle may be determined by the determining unit 5, in order to determine that the object 11 is within the safety zone 21.

After determining that the detected object 11 is within the safety zone 21, the determining unit 5 triggers the control unit 7 to control the braking system 9 of the automated guided vehicle 1 for performing the safety stop.

## Claims

1. A method (101) for operating an automated guided vehicle (1) comprising the steps of:
- determining (103) a first vehicle movement parameter of said automated guided vehicle (1), and a safety zone (21) comprising a perimeter surrounding said automated guided vehicle (1) that covers potential swept paths (23A, 23B), preferably all potential swept paths, of said automated guided vehicle (1) during a safety stop of said automated guided vehicle (1);
- setting (105) a second vehicle movement parameter and said safety zone based on said determined first vehicle movement parameter and said safety zone,
**characterized, in that** during said step of determining (103) said first vehicle movement parameter of said automated guided vehicle (1), said first vehicle movement parameter comprises a predetermined steering angle of said automated guided vehicle (1).

2. The method (101) according to claim 1, wherein said method (101) further comprises the steps of:
- detecting (107), by a detection system (3), during movement of said automated guided vehicle (1), an object (11) outside said automated guided vehicle (1);
- determining (109), by a determining unit (5), that said object (11) is within a predetermined distance from said safety zone (21);
- controlling (111), by a control unit (7), a braking system (9) of said automated guided vehicle (1) for performing said safety stop triggered by said determining that said detected object (11) is within said predetermined distance.

3. The method (101) according claim 2, wherein said predetermined distance is equal to zero.

4. The method (101) according to claim 2 or 3, wherein said determining unit (5) is arranged for determining that said object (11) is within said predetermined distance from said safety zone (21), by determining an angle (α) and a distance (D1) of said object (11) to said automated guided vehicle (1) and comparing said angle (α) and said distance (D1) to said safety zone (21), wherein during said step of determining (109), said angle (α) and said distance (D1) of said object (11) to said automated guided vehicle (1) are determined.

5. The method (101) according to any one of the preceding claims, wherein a distance (D2) of said perimeter to said automated guided vehicle varies along said perimeter.

6. The method (101) according to any one of the preceding claims, wherein, during said step of determining (103) said first vehicle movement parameter of said automated guided vehicle (1), said first vehicle movement parameter additionally comprises at least one of:
- a predetermined speed of said automated guided vehicle (1);
- a predetermined steering speed of said automated guided vehicle (1);
- a predetermined braking distance of said automated guided vehicle (1) when moving at said predetermined speed.

7. The method (101) according to any one of the claims 1 to 5, wherein, during said step of setting (105), said second vehicle movement parameter of said automated guided vehicle (1) comprises at least one of:
- a set maximum speed of said automated guided vehicle (1);
- a set maximum steering angle of said automated guided vehicle (1);
- a set maximum steering speed of said automated guided vehicle (1).

8. An automated guided vehicle (1) comprising:
- a braking system (9) for performing a safety stop of said automated guided vehicle (1);
- a detection system (3) arranged for detecting, during movement of said automated guided vehicle (1), an object (11) outside said automated guided vehicle (1);
- a determining unit (5), communicatively coupled to said detection system (3), arranged for determining that said detected object (11) is within a predetermined distance from a safety zone (21), wherein said safety zone (21) comprises a perimeter surrounding said automated guided vehicle (1) that covers potential swept paths (23A, 23B), preferably all potential swept paths, of said automated guided vehicle (1) during said safety stop and wherein said safety zone (21) is related to a first vehicle movement parameter of said automated guided vehicle (1)
- a control unit (7), communicatively coupled to said determining unit (5), arranged for controlling said braking system (9) for performing said safety stop triggered by said determining that said detected object (11) is within said predetermined distance,
**characterized in that** said first vehicle movement parameter of said automated guided vehicle (1) comprises a predetermined steering angle of said automated guided vehicle (1).

9. The automated guided vehicle (1) according to claim 8, wherein said predetermined distance is equal to zero.

10. The automated guided vehicle (1) according to claim 8 or 9, wherein said determining unit (5) is further arranged for determining that said object (11) is within said predetermined distance from said safety zone (21), by determining an angle (α) and a distance (D1) of said object (11) to said vehicle and comparing said angle (α) and distance (D1) to said safety zone (21).

11. The automated guided vehicle (1) according to any one of the claims 8 to 10, wherein said automated guided vehicle (1) comprises an electromotor (13) for moving said automated guided vehicle (1) and wherein said braking system (9) is arranged for stopping said automated guided vehicle (1), during a safety stop, by controlling said electromotor (13).

12. The automated guided vehicle (1) according to claim 11, wherein said braking system (9) is arranged for stopping said automated guided vehicle (1), during said safety stop, solely by controlling said electromotor (13).

13. The automated guided vehicle (1) according to any one of the claims 8 to 12, wherein said detection system (3) comprises a plurality of 2D LiDAR scanners that are arranged such that said detection system (3) is arranged for detecting, during movement of said automated guided vehicle (1), 360 degrees around said automated guided vehicle (1).

14. The automated guided vehicle (1) according to any one of the claims 8 to 13, wherein a steering system (15) of said automated guided vehicle (1) comprises a linear actuator for steering said automated guided vehicle (1) and a servomotor provided with an integrated encoder for powering said linear actuator for steering said automated guided vehicle (1).

15. The automated guided vehicle (1) according to any one of the claims 8 to 14, wherein said automated guided vehicle (1) comprises a servomotor for moving said automated guided vehicle (1).

## Patentansprüche

1. Verfahren (101) zum Betrieb eines automatisch geführten Fahrzeugs (1), umfassend die folgenden Schritte:
- Bestimmen (103) eines ersten Fahrzeugbewegungsparameters des automatisch geführten Fahrzeugs (1) und einer Sicherheitszone (21), die einen Umkreis umfasst, der das automatisch geführte Fahrzeug (1) umgibt und potentielle Fahrwege (23A, 23B), vorzugsweise alle potentiellen Fahrwege, des automatisch geführten Fahrzeugs (1) während eines Sicherheitsstopps des automatisch geführten Fahrzeugs (1) abdeckt;
- Vorgeben (105) eines zweiten Fahrzeugbewegungsparameters und der Sicherheitszone basierend auf dem bestimmten ersten Fahrzeugbewegungsparameter und der Sicherheitszone,
**dadurch gekennzeichnet, dass** während des Schritts des Bestimmens (103) des ersten Fahrzeugbewegungsparameters des automatisch geführten Fahrzeugs (1) der erste Fahrzeugbewegungsparameter einen vorbestimmten Lenkwinkel des automatisch geführten Fahrzeugs (1) umfasst.

2. Verfahren (101) gemäß Anspruch 1, wobei das Verfahren (101) ferner die folgenden Schritte umfasst:
- Erfassen (107) eines Objekts (11) außerhalb des automatisch geführten Fahrzeugs (1) durch ein Erfassungssystem (3) während der Bewegung des automatisch geführten Fahrzeugs (1);
- Bestimmen (109) durch eine Bestimmungseinheit (5), dass sich das Objekt (11) innerhalb eines vorbestimmten Abstands von der Sicherheitszone (21) befindet;
- Steuern (111), durch eine Steuereinheit (7), eines Bremssystems (9) des automatisch geführten Fahrzeugs (1) zum Durchführen des Sicherheitsstopps, der durch das Bestimmen ausgelöst wird, dass sich das erfasste Objekt (11) innerhalb des vorbestimmten Abstands befindet.

3. Verfahren (101) gemäß Anspruch 2, wobei der vorbestimmte Abstand gleich null ist.

4. Verfahren (101) gemäß Anspruch 2 oder 3, wobei die Bestimmungseinheit (5) zum Bestimmen eingerichtet ist, dass sich das Objekt (11) innerhalb des vorbestimmten Abstands von der Sicherheitszone (21) befindet, durch Bestimmen eines Winkels (α) und eines Abstands (D1) des Objekts (11) zu dem automatisch geführten Fahrzeug (1) und Vergleichen des Winkels (α) und des Abstands (D1) mit der Sicherheitszone (21), wobei der Winkel (α) und der Abstand (D1) des Objekts (11) zu dem automatisch geführten Fahrzeug (1) während des Schritts des Bestimmens (109) bestimmt werden.

5. Verfahren (101) gemäß einem der vorhergehenden Ansprüche, wobei ein Abstand (D2) des Umkreises zu dem automatisch geführten Fahrzeug entlang des Umkreises variiert.

6. Verfahren (101) gemäß einem der vorhergehenden Ansprüche, wobei während des Schritts des Bestimmens (103) des ersten Fahrzeugbewegungsparameters des automatisch geführten Fahrzeugs (1) der erste Fahrzeugbewegungsparameter zusätzlich mindestens eines umfasst von:
- einer vorbestimmten Geschwindigkeit des automatisch geführten Fahrzeugs (1);
- einer vorbestimmten Lenkgeschwindigkeit des automatisch geführten Fahrzeugs (1);
- einem vorbestimmten Bremsabstand des automatisch geführten Fahrzeugs (1), wenn dieses mit der vorbestimmten Geschwindigkeit fährt.

7. Verfahren (101) gemäß einem der Ansprüche 1 bis 5, wobei während des Schritts des Vorgebens (105) der zweite Fahrzeugbewegungsparameter des automatisch geführten Fahrzeugs (1) mindestens eines umfasst von:
- einer vorgegebenen maximalen Geschwindigkeit des automatisch geführten Fahrzeugs (1);
- einem vorgegebenen maximalen Lenkwinkel des automatisch geführten Fahrzeugs (1);
- einer vorgegebenen maximalen Lenkgeschwindigkeit des automatisch geführten Fahrzeugs (1).

8. Automatisch geführtes Fahrzeug (1), umfassend:
- ein Bremssystem (9) zum Durchführen eines Sicherheitsstopps des automatisch geführten Fahrzeugs (1);
- ein Erfassungssystem (3), das dazu eingerichtet ist, während der Bewegung des automatisch geführten Fahrzeugs (1) ein Objekt (11) außerhalb des automatisch geführten Fahrzeugs (1) zu erfassen;
- eine Bestimmungseinheit (5), die kommunizierend mit dem Erfassungssystem (3) gekoppelt und dazu eingerichtet ist, zu bestimmen, dass sich das erfasste Objekt (11) innerhalb eines vorbestimmten Abstands von einer Sicherheitszone (21) befindet, wobei die Sicherheitszone (21) einen Umkreis umfasst, der das automatisch geführte Fahrzeug (1) umgibt und potentielle Fahrwege (23A, 23B), vorzugsweise alle potentiellen Fahrwege, des automatisch geführten Fahrzeugs (1) während des Sicherheitsstopps abdeckt, und wobei die Sicherheitszone (21) mit einem ersten Fahrzeugbewegungsparameter des automatisch geführten Fahrzeugs (1) in Beziehung steht;
- eine Steuereinheit (7), die kommunizierend mit der Bestimmungseinheit (5) gekoppelt und zum Steuern des Bremssystems (9) zum Durchführen des Sicherheitsstopps eingerichtet ist, der durch das Bestimmen ausgelöst wird, dass sich das erfasste Objekt (11) innerhalb des vorbestimmten Abstands befindet,
**dadurch gekennzeichnet, dass** der erste Fahrzeugbewegungsparameter des automatisch geführten Fahrzeugs (1) einen vorbestimmten Lenkwinkel des automatisch geführten Fahrzeugs (1) umfasst.

9. Automatisch geführtes Fahrzeug (1) gemäß Anspruch 8, wobei der vorbestimmte Abstand gleich null ist.

10. Automatisch geführtes Fahrzeug (1) gemäß Anspruch 8 oder 9, wobei die Bestimmungseinheit (5) ferner zum Bestimmen eingerichtet ist, dass sich das Objekt (11) innerhalb des vorbestimmten Abstands von der Sicherheitszone (21) befindet, durch Bestimmen eines Winkels (α) und eines Abstands (D1) des Objekts (11) zu dem Fahrzeug und Vergleichen des Winkels (α) und Abstands (D1) mit der Sicherheitszone (21).

11. Automatisch geführtes Fahrzeug (1) gemäß einem der Ansprüche 8 bis 10, wobei das automatisch geführte Fahrzeug (1) einen Elektromotor (13) zum Bewegen des automatisch geführten Fahrzeugs (1) umfasst und wobei das Bremssystem (9) zum Anhalten des automatisch geführten Fahrzeugs (1) während eines Sicherheitsstopps durch Steuern des Elektromotors (13) eingerichtet ist.

12. Automatisch geführtes Fahrzeug (1) gemäß Anspruch 11, wobei das Bremssystem (9) zum Anhalten des automatisch geführten Fahrzeugs (1) während des Sicherheitsstopps allein durch Steuern des Elektromotors (13) eingerichtet ist.

13. Automatisch geführtes Fahrzeug (1) gemäß einem der Ansprüche 8 bis 12, wobei das Erfassungssystem (3) eine Vielzahl von 2D-LiDAR-Scannern umfasst, die so eingerichtet sind, dass das Erfassungssystem (3) während der Bewegung des automatisch geführten Fahrzeugs (1) zum Erfassen von 360 Grad um das automatisch geführte Fahrzeug (1) herum eingerichtet ist.

14. Automatisch geführtes Fahrzeug (1) gemäß einem der Ansprüche 8 bis 13, wobei ein Lenksystem (15) des automatisch geführten Fahrzeugs (1) einen Linearaktuator zum Lenken des automatisch geführten Fahrzeugs (1) und einen Servomotor umfasst, der mit einem integrierten Codierer zum Ansteuern des Linearaktuators zum Lenken des automatisch geführten Fahrzeugs (1) versehen ist.

15. Automatisch geführtes Fahrzeug (1) gemäß einem der Ansprüche 8 bis 14, wobei das automatisch geführte Fahrzeug (1) einen Servomotor zum Bewegen des automatisch geführten Fahrzeugs (1) umfasst.

## Revendications

1. Procédé (101) pour faire fonctionner un véhicule à guidage automatique (1) comprenant les étapes de :
- détermination (103) d'un premier paramètre de déplacement de véhicule dudit véhicule à guidage automatique (1), et d'une zone de sécurité (21) comprenant un périmètre entourant ledit véhicule à guidage automatique (1) qui couvre des trajectoires balayées potentielles (23A, 23B), de préférence toutes les trajectoires balayées potentielles, dudit véhicule à guidage automatique (1) lors d'un arrêt de sécurité dudit véhicule à guidage automatique (1) ;
- définition (105) d'un second paramètre de déplacement de véhicule et de ladite zone de sécurité sur la base dudit premier paramètre de déplacement de véhicule et de ladite zone de sécurité déterminés,
**caractérisé en ce que,** pendant ladite étape de détermination (103) dudit premier paramètre de déplacement de véhicule dudit véhicule à guidage automatique (1), ledit premier paramètre de déplacement de véhicule comprend un angle de braquage prédéterminé dudit véhicule à guidage automatique (1).

2. Procédé (101) selon la revendication 1, dans lequel ledit procédé (101) comprend en outre les étapes de :
- détection (107), par un système de détection (3), lors du déplacement dudit véhicule à guidage automatique (1), d'un objet (11) à l'extérieur dudit véhicule à guidage automatique (1) ;
- détermination (109), par une unité de détermination (5), que ledit objet (11) se situe à l'intérieur d'une distance prédéterminée de ladite zone de sécurité (21) ;
- commande (111), par une unité de commande (7), d'un système de freinage (9) dudit véhicule à guidage automatique (1), pour effectuer ledit arrêt de sécurité déclenché par ladite détermination du fait que ledit objet détecté (11) se situe à l'intérieur de ladite distance prédéterminée.

3. Procédé (101) selon la revendication 2, dans lequel ladite distance prédéterminée est égale à zéro.

4. Procédé (101) selon la revendication 2 ou 3, dans lequel ladite unité de détermination (5) est agencée pour déterminer que ledit objet (11) se situe à l'intérieur de ladite distance prédéterminée de ladite zone de sécurité (21), en déterminant un angle (α) et une distance (D1) dudit objet (11) par rapport audit véhicule à guidage automatique (1), et en comparant ledit angle (α) et ladite distance (D1) à ladite zone de sécurité (21), dans lequel, lors de ladite étape de détermination (109), ledit angle (α) et ladite distance (D1) dudit objet (11) par rapport audit véhicule à guidage automatique (1) sont déterminés.

5. Procédé (101) selon l'une quelconque des revendications précédentes, dans lequel une distance (D2) dudit périmètre audit véhicule à guidage automatique varie le long dudit périmètre.

6. Procédé (101) selon l'une quelconque des revendications précédentes, dans lequel, lors de ladite étape de détermination (103) dudit premier paramètre de déplacement de véhicule dudit véhicule à guidage automatique (1), ledit premier paramètre de déplacement de véhicule comprend en outre au moins l'une parmi :
- une vitesse prédéterminée dudit véhicule à guidage automatique (1) ;
- une vitesse de braquage prédéterminée dudit véhicule à guidage automatique (1) ;
- une distance de freinage prédéterminée dudit véhicule à guidage automatique (1) lorsqu'il se déplace à ladite vitesse prédéterminée.

7. Procédé (101) selon l'une quelconque des revendications 1 à 5, dans lequel, lors de ladite étape de définition (105), ledit second paramètre de déplacement de véhicule dudit véhicule à guidage automatique (1) comprend au moins l'un parmi :
- une vitesse maximale définie dudit véhicule à guidage automatique (1) ;
- un angle de braquage maximal défini dudit véhicule à guidage automatique (1) ;
- une vitesse de braquage maximale définie dudit véhicule à guidage automatique (1).

8. Véhicule à guidage automatique (1) comprenant :
- un système de freinage (9) pour effectuer un arrêt de sécurité dudit véhicule à guidage automatique (1) ;
- un système de détection (3) agencé pour détecter, lors du déplacement dudit véhicule à guidage automatique (1), un objet (11) à l'extérieur dudit véhicule à guidage automatique (1) ;
- une unité de détermination (5), couplée en communication audit système de détection (3), agencée pour déterminer que ledit objet détecté (11) se situe à l'intérieur d'une distance prédéterminée d'une zone de sécurité (21), dans laquelle ladite zone de sécurité (21) comprend un périmètre entourant ledit véhicule à guidage automatique (1) qui couvre des trajectoires balayées potentielles (23A, 23B), de préférence toutes les trajectoires balayées potentielles, dudit véhicule à guidage automatique (1) lors dudit arrêt de sécurité, et dans laquelle ladite zone de sécurité (21) est liée à un premier paramètre de déplacement de véhicule dudit véhicule à guidage automatique (1) ;
- une unité de commande (7), couplée en communication à ladite unité de détermination (5), agencée pour commander ledit système de freinage (9) afin qu'il effectue ledit arrêt de sécurité déclenché par ladite détermination du fait que ledit objet détecté (11) se situe à l'intérieur de ladite distance prédéterminée,
**caractérisé en ce que** ledit premier paramètre de déplacement de véhicule dudit véhicule à guidage automatique (1) comprend un angle de braquage prédéterminé dudit véhicule à guidage automatique (1).

9. Véhicule à guidage automatique (1) selon la revendication 8, dans lequel ladite distance prédéterminée est égale à zéro.

10. Véhicule à guidage automatique (1) selon la revendication 8 ou 9, dans lequel ladite unité de détermination (5) est en outre agencée pour déterminer que ledit objet (11) se situe à l'intérieur de ladite distance prédéterminée de ladite zone de sécurité (21), en déterminant un angle (α) et une distance (D1) dudit objet (11) par rapport audit véhicule, et en comparant ledit angle (α) et ladite distance (D1) à ladite zone de sécurité (21).

11. Véhicule à guidage automatique (1) selon l'une quelconque des revendications 8 à 10, dans lequel ledit véhicule à guidage automatique (1) comprend un moteur électrique (13) pour déplacer ledit véhicule à guidage automatique (1) et dans lequel ledit système de freinage (9) est agencé pour arrêter ledit véhicule à guidage automatique (1), lors d'un arrêt de sécurité, en commandant ledit moteur électrique (13).

12. Véhicule à guidage automatique (1) selon la revendication 11, dans lequel ledit système de freinage (9) est agencé pour arrêter ledit véhicule à guidage automatique (1), lors dudit arrêt de sécurité, uniquement en commandant ledit moteur électrique (13).

13. Véhicule à guidage automatique (1) selon l'une quelconque des revendications 8 à 12, dans lequel ledit système de détection (3) comprend une pluralité de scanners LiDAR 2D qui sont agencés de sorte que ledit système de détection (3) soit agencé pour détecter, lors du déplacement dudit véhicule à guidage automatique (1), 360 degrés autour dudit véhicule à guidage automatique (1).

14. Véhicule à guidage automatique (1) selon l'une quelconque des revendications 8 à 13, dans lequel un système de direction (15) dudit véhicule à guidage automatique (1) comprend un actionneur linéaire pour diriger ledit véhicule à guidage automatique (1) et un servomoteur doté d'un encodeur intégré pour alimenter ledit actionneur linéaire afin de diriger ledit véhicule à guidage automatique (1).

15. Véhicule à guidage automatique (1) selon l'une quelconque des revendications 8 à 14, dans lequel ledit véhicule à guidage automatique (1) comprend un servomoteur pour déplacer ledit véhicule à guidage automatique (1).
